# EUROPEAN PATENT APPLICATION

(11) **EP 2 851 876 A2**
(43) Date of publication of application: **25.03.2015**
(21) Application number: 14163918.7
(22) Date of filing: 08.04.2014
(51) Int. Cl.: G07F 7/08, G07C 5/08, G07F 17/00, G07F 7/12, G07B 15/00, G06Q 20/34

(54) **TRANSPORT SERVICE CARD AND SYSTEM AND METHOD FOR FACILITATING A TRANSPORT SERVICE**

(30) Priority: 19.09.2013 AU 2013231074
(71) Applicant: Taxi Club Pty Ltd, Thornbury, Victoria 3071 (AU)
(72) Inventor: Karagkounis, David, Thornbury, Victoria 3071 (AU)
(74) Representative: Carter, Stephen John

(57) **Abstract**

Embodiments relate generally to a card for use in relation to a transport service. The card may comprise: a body having a first face and an opposed second face; machine-readable code storage means carried by the body and storing coded information; and at least one retroreflective area on at least one of the first face and second face. The card may be used in a system or method executed remotely and/or in a transport vehicle to debit a pre-paid amount from an account associated with the card and to allow a destination address to be automatically determined and/or downloaded to the vehicle responsive to reading the card at a card reader in the vehicle.

## Description

### Technical Field

Described embodiments relate generally to a transport service card and methods of using such a card to facilitate a transport service.

### Background

For people attending events or visiting entertainment venues, it is not uncommon for alcohol to be consumed and for a transport service to be required to transport such people home after the entertainment. Cash or credit cards may be used to pay for such a transport service, commonly in the form of a taxi service.

In some cases, however, the use of taxis can come with risks, both for the driver and the passenger. The driver may feel unsafe when transporting intoxicated passengers, and may be particularly intimidated by male passengers of a large stature. As a result, these types of passengers may be ignored by taxi drivers, and may find it difficult to get safely home at certain times of the night. Conversely, some passengers may feel unsafe getting into a taxi with an unknown driver, particularly female passengers.

Furthermore, both passengers and drivers may be afraid of being taken advantage of or treated unfairly. For example, the driver may demand onerous terms, such as demanding an unreasonably high fare amount. Where a person does not have adequate cash to get them to the desired destination, the taxi driver may be cheated of the full fare amount. Alternatively, the prospective passenger may be required to pay upfront, in which case the passenger may not be able to return home due to inadequate funds. On the other hand, while use of a credit card to pay for the transport fare is convenient, the credit card details can be captured and subject to fraudulent use.

It is desired to address or ameliorate one or more shortcomings or disadvantages associated with existing ways of procuring or rendering transport services, or to at least provide a useful alternative thereto.

Any discussion of documents, acts, materials, devices, articles or the like which has been included in the present specification is not to be taken as an admission that any or all of these matters form part of the prior art base or were common general knowledge in the field relevant to the present disclosure as it existed before the priority date of each claim of this application.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

### Summary

Some embodiments relate to a card for use in relation to a transport service, comprising:
a body having a first face and an opposed second face;
machine-readable code storage means carried by the body and storing coded information;
at least one retroreflective area on at least one of the first face and second face; and
identification information visible on at least one of the first side and the second side, the identification information corresponding in part to the coded information.

The at least one retroreflective area may cover at least two thirds of the first face and/or the second face. The at least one retroreflective area may be disposed on an opposite face to the identification information.

The code storage means may comprise at least one of: an encodable magnetic substrate; an induction coil; a barcode; a radio-frequency identification (RFID) tag; and an integrated circuit with exposed contacts and a memory chip. The identification information may comprise at least one of: a card serial number; a user account number; and a credit or debit account identifier.

The code storage means may store information enabling a user credit to be automatically determined, wherein the user credit can be applied to pay for a transport fare. The identification information may include information identifying a registered user of the card. The coded information may comprise a residential address of a registered user of the card.

Some embodiments relate to use of the card described herein to hail a transport vehicle by facing at least one retroreflective area toward the transport vehicle and to pay for a transport fare.

Some embodiments relate to a method of facilitating a transport service, comprising:
at a beginning of the transport service, reading coded information from a card using automated reading means in a transport vehicle, the coded information being in a form not readable by humans;
determining a pre-paid credit associated with the card based on the coded information; and
at the end of the transport service, debiting an amount of a transport fare from the pre-paid credit.

The debiting may be performed automatically. The debiting may be performed automatically in response to input indicating that the destination has been reached. The input indicating that the destination has been reached may be received from the driver or from a navigation system in the vehicle.

The card may comprise physical address information of a registered user of the card. The coded information read from the card may comprise the physical address information. The physical address information may be able to be determined based on the coded information read from the card. A display in the transport vehicle may display the coded information or at least part of the coded information.

The method may further comprise transmitting the physical address information to a vehicle navigation system of the transport vehicle. The physical address information of the registered user may be printed on the card in a human readable form.

The in-vehicle computer may display a prompt asking the user to enter a personal identification number (PIN) before determining the pre-paid credit associated with the card.

The method may further comprise again reading the card at the end of the transport service using the automated reading means, wherein the debiting may be performed in response to the again reading.

Some embodiments relate to a system configured to perform the method of facilitating a transport service described.

Some embodiments relate broadly to a system for facilitating a transport service, comprising:
a server system in communication with an in-vehicle card reading device, the server system being configured to: receive a balance query from the in-vehicle card reading device in relation to a pre-paid account associated with a card read by the in-vehicle card reading device, determine an available credit in the pre-paid account and transmit a reply to the in-vehicle card-reading device indicating the available credit.

The server system may be in communication with an external server hosting an email account associated with the pre-paid account. The server system may be in communication with a financial institution server managing a bank account associated with the pre-paid account.

The server system may be configured to receive fare detail data from the in-vehicle computer and to log this data in a data store accessible to the server system.

The server system may be configured to store information associated with the user of the pre-paid account, including a default destination address. The server system may be further configured to receive a query from the in-vehicle computer in relation to the stored information associated with the user of the pre-paid account, and to transmit a reply to the in-vehicle computer communicating the stored information.

The system may further comprise a vehicle comprising the in-vehicle card reading device.

Some embodiments relate to a method of facilitating a transport service operable in a vehicle, the method comprising:
receiving coded information from a card;
determining a physical address and a prepaid credit associated with the card based on the received code information;
providing the physical address to a navigation system;
subject to receiving an indication from the navigation system that the vehicle is in a proximity of the physical address, debiting an amount from the pre-paid credit.

Some embodiments relate to a system for facilitating a transport service operable in a vehicle, the system comprising:
a card reader arranged to receive coded information from a card; and
a processor arranged to:
   receive coded information from a card;
   determine a physical address and a prepaid credit associated with the card based on the received code information;
   provide the physical address to a navigation system;
   subject to receiving an indication from the navigation system that the vehicle is in a proximity of the physical address, debit an amount from the pre-paid credit.

### Brief Description of the Drawings

Figure 1 is a block diagram of a system for facilitating a transport service according to some embodiments;
Figure 2A is a schematic diagram of a card useable to procure a transport service, showing one face of the card;
Figure 2B is a schematic diagram of an opposite face of the card of Figure 2A;
Figure 3A is a schematic diagram of a card useable to procure a transport service, showing one face of the card;
Figure 3B is a schematic diagram of an opposite face of the card of Figure 3A;
Figure 4A is a schematic diagram of a card useable to procure a transport service, showing one face of the card;
Figure 4B is a schematic diagram of an opposite face of the card of Figure 4A;
Figure 5 is a flowchart of a method of engaging a transport vehicle for a transport service; and
Figure 6 is a flowchart of a method of finalizing the transport service.

### Detailed Description

Described embodiments relate generally to a transport service card and systems and methods that use data stored on or in relation to such a card to facilitate a transport service. Generally, described embodiments involve the use of a special card to attract the attention of a service vehicle, such as a taxi, and the card then acts as a means of payment for an ensuing transport service fare for transport to a designated location, which may be by default the card user's home address.

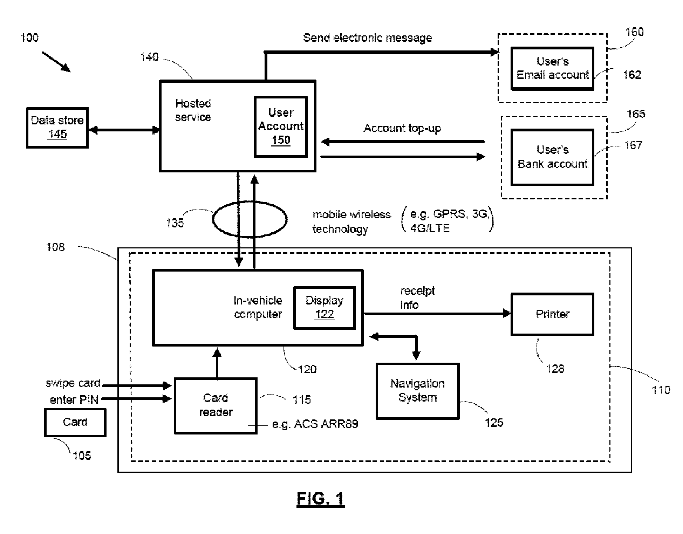

Figure 1 is a block diagram of a system 100 for interfacing with a card 105 to facilitate the transport service. System 100 comprises a transport vehicle 108, an in-vehicle system 110, an externally hosted transport facilitation service 140 (hosted on a suitable computer server system) and optionally a further external server 160 to host a user's email account 162 and further optionally a financial institution server 165 managing a user's bank account 167. The financial institution server 165 need not be in the same country as the hosted service 140 or the vehicle 108 but should be accessible to hosted service 140 over a network, such as the Internet.

The in-vehicle system 110 comprises an in-vehicle computer 120 in communication with a card reader 115 and the hosted service 140. In-vehicle computer 120 is in communication with hosted service 140 over local wireless telecommunications infrastructure 135 in the vicinity of the vehicle 108. Optionally, the in-vehicle computer 120 may also be in communication with an in-vehicle navigation system 125, such as is commonly used in taxis, in the vehicle 108. Optionally, the in-vehicle computer 120 may also communicate to a printer 128 within the vehicle 108 to provide the user with a printed receipt following conclusion of the transport service and the payment therefor.

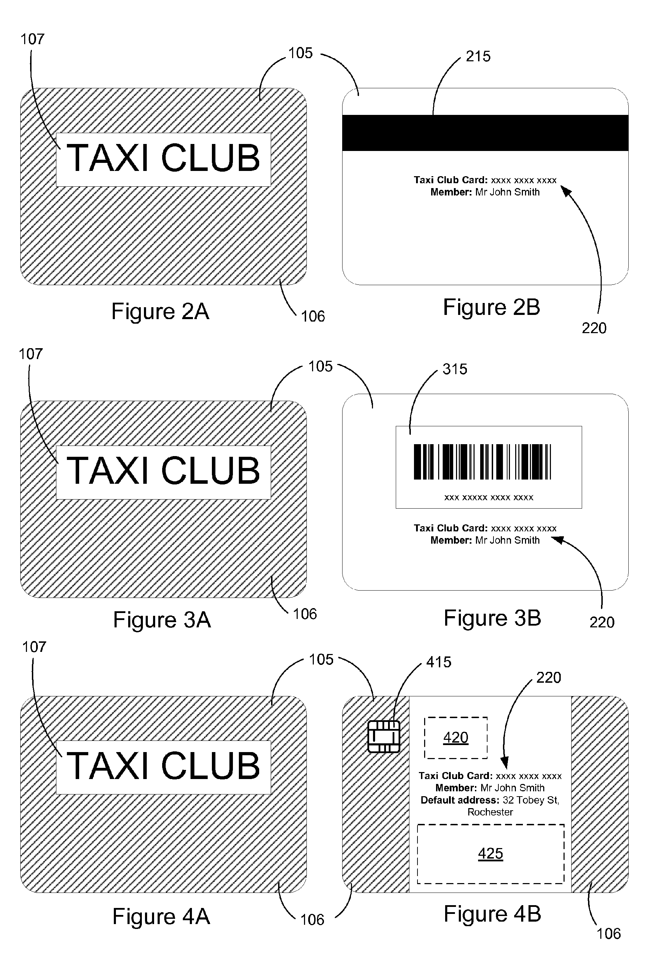

Examples of card 105 are shown be way of illustration in Figures 2A, 2B, 3A, 3B, 4A and 4B. Generally, the card 105 has a body with a first flat face and an opposite second flat face. The body comprises a suitable flexible plastic substrate that is sized to resemble a credit card or other card readily accommodated in a user's wallet or purse. On at least one face, the card 105 has an area on which is adhered, printed or otherwise formed a retro-reflective material 106 that, when held in front of a light source, such as vehicle headlamps, brightly reflects light back toward a driver of the vehicle, thereby providing a readily noticeable visual indication that the person holding the card has a card specially designed to facilitate transport services. Such retro-reflective materials are commonly used in situations where visibility may be low, such as at night, in order to make one or more objects carrying the retro-reflective material significantly more visible to drivers at night than other reflective (but not retro-reflective) materials.

The retro-reflective material 106 may be present on one or both faces of the card 105 and may be disposed across at least a substantial portion of one of the faces, in order to maximise visibility to a taxi driver. For example, the retro-reflective material 106 may be disposed across about at least two-thirds of the surface area of one face.

Alternatively, a pattern, such as bands (Fig. 4B) or striations, can be formed over less than two-thirds of the surface area of one face of the card 105, but in a way that renders the retro-reflective material 106 nevertheless clearly visible in the direction that that card face is presented.

The card 105 may have indicia 107 on the same face as the retro-reflective material 106 or it may be on the opposite face of the card 105. The indicia 107 may include some kind of logo or descriptive text, such as "Taxi Club". Other indicia 220 may be printed on the card 105 on an opposite face to the retro-reflective material 106. Such other indicia 220 may include user identification details, a card or membership number or account number, for example. Optionally, an image of the user may also be printed on one face of the card 105. Optionally, the user's home address or other designated default destination address may be printed on one face of the card 105. Alternatively, or in addition, the user's home address or other default destination address may be encoded on the card in a machine readable form.

Alternatively, or in addition, the user's home address or other default destination may be stored on hosted service 140 and accessible to the driver on the in-vehicle system 110 via the local wireless communications infrastructure 135 upon verification of the card details. The default destination may be stored on hosted service 140 by the receipt of user configuration input, which may be via the user using a web-based user interface. The web-based user interface may be a website accessible to the user using a browser on a mobile phone, PC or other computing device. The website may allow them to log onto an account associated with their card 105, and allow them to adjust details such as the default address, special instructions for passengers with disabilities, and emergency contact details. The user may choose to store multiple addresses on hosted service 140, which in some embodiments may be three, four, five, six, seven or more addresses. The user may, for example, store one or more of a home address, a work address, and the address of a friend or family member. Alternatively or in addition, where a user is travelling outside of their home town they may choose to store the address of their hotel, or another temporary place of residence.

As shown by way of example in Figures 2B, 3B and 4B, the card 105 may employ one or several means for encoding information to be carried on the card 105. Such encoding means may include an encodable magnetic substrate, such as a magnetic strip 215, a one-dimensional or two-dimensional bar code 315 or a memory chip on an integrated circuit 415 with exposed contacts or an antenna for communication with an external reader 115, for example. The encoding means may also or alternatively include a suitable passive induction coil 425 to excite a response from a radio frequency identification (RFID) chip 420 embedded in the body of the card 105. Thus, the card 105 may carry multiple machine readable encoding means storing coded information separate from, but possibly partly duplicative of, identification information 220 printed on one or both faces of the card 105.

The encoded information stored by the machine readable encoding means may include the default destination address of the user (if thus configured), the user's name and optionally date of birth, a log of card use and feedback given by drivers, a unique card identifier to enable identification of the card and the user's account information and optionally also an amount of credit associated with the card and the user's card account. The encoded information may also include special user care instructions, such as might identify a disability of the user requiring special care by the driver. The unique card identifier may act as the primary identifier to enable determination of all other relevant user account information, such as name, address, available credit, country of origin, special user care instructions etc.

Thus, the card 105 functions as a pre-paid debit card with an amount of credit that can be applied to pay for a transport service fare. This available credit can be checked at the beginning of the transport service, so that the service operator, such as a taxi driver, can verify that sufficient funds are available to pay for the fare before accepting the passenger. Further, the card 105 can be used to convey directions and/or instructions to the driver to allow the driver to easily take the user home, even where there may be language barriers between the user and the driver. These instructions may be able to be stored by the user on hosted service 140 via a web-based user interface, and accessible to the driver on in-vehicle computer 120. The card 105 may also be used to store a rating of the user as determined by scores given by previous taxi drivers. This may notify the driver if the user has a history of bad behaviour or non-compliance.

The in-vehicle computer 120 may comprise one or more existing computing devices or peripherals arranged or configured to perform the functions described herein. Alternatively, the in-vehicle computer 120 may be purpose-built to perform the functions described herein. At a minimum, the in-vehicle computer 120 comprises at least one processor, suitable non-volatile memory for storing processor-executable instructions (to carry out the functions described herein, such as interfacing with the card reader 115, the hosted service 140 and the navigation system 125), suitable input and output interfaces and means to receive and send messages to a remote IP address over a wireless communication interface. The in-vehicle interfaces may comprise or be separate from a radio antenna in the vehicle 108 that actually accomplishes the wireless communication. At least one or both of the in-vehicle computer 120 and card reader 115 has a display (such as display 122) to display messages to the driver and/or passenger (card user).

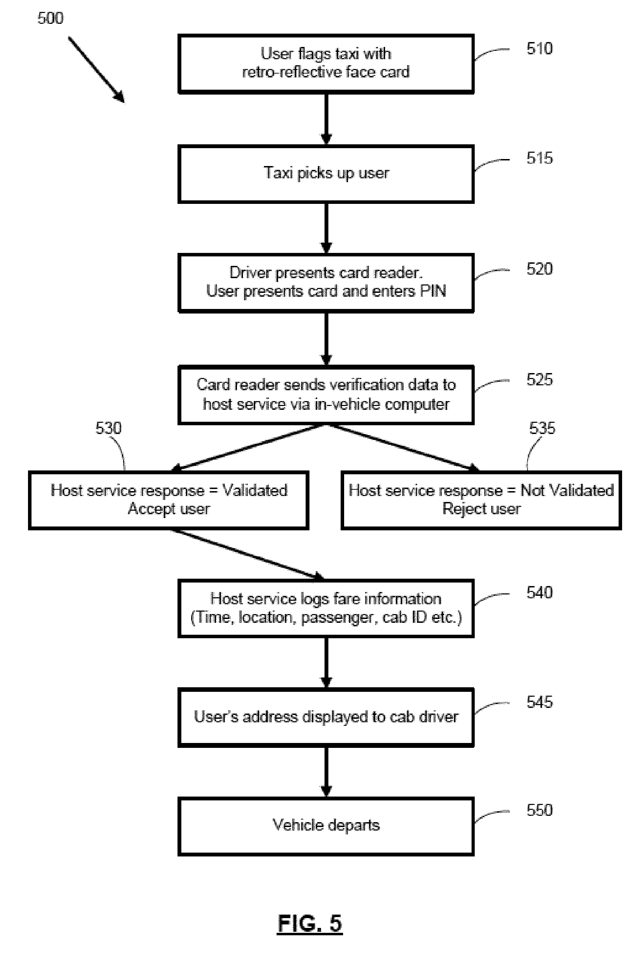

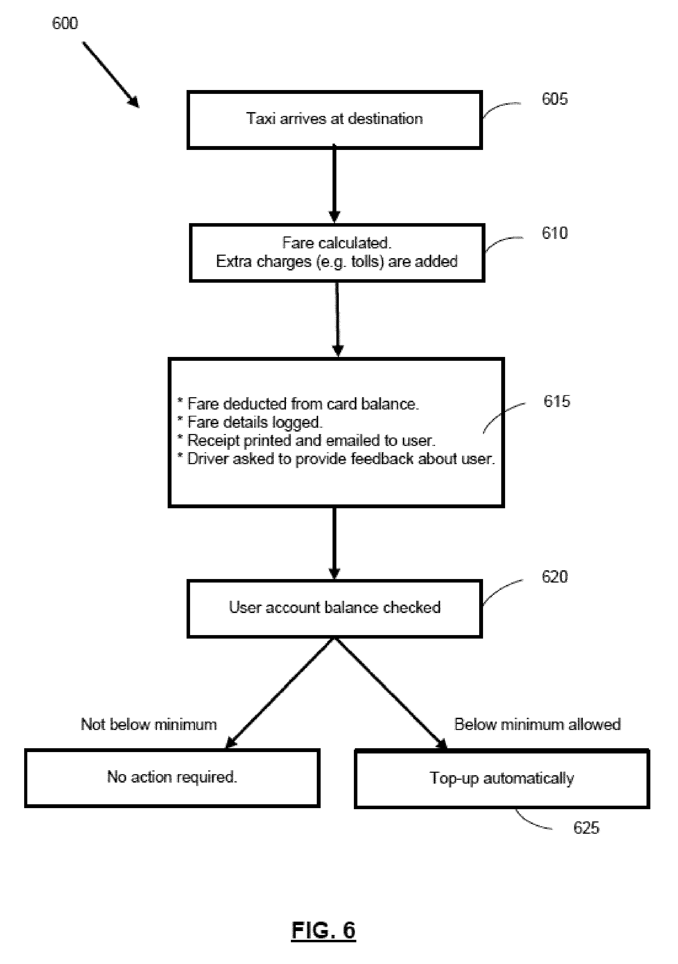

Referring now to Figures 5 and 6, methods of facilitating a transport service using the card 105 and components of system 100 are described in further detail. Figure 5 shows a method 500 of initiating a transport service. Method 500 may begin at step 510 when a user attempts to flag down a transport vehicle, such as a taxi, by facing one face of the card 105 having the retro-reflective material 106 on it toward the vehicle. At step 515, the driver of the vehicle may then allow the user to climb into the vehicle, with a degree of confidence that the user has appropriate means for payment of the transport fare.

At step 520, the vehicle driver may present the card reader 115 to the passenger user so that the card reader 115 can read the encoded information and the encoding means of the card 105. Depending on the form of machine-readable coding means on the card 105, the card 105 may be swiped, inserted or placed adjacent the card reader 115 to enable it to read the encoded information stored on the card 105. The user may also enter a personal identification number (PIN) as a form of pre-authorisation of payment of the transport fare. Optionally, the user may be informed through text on a suitable display 122 incorporated in or associated with the in-vehicle computer 120 that entering their PIN is an authorisation by them for the fare amount to be debited from their account upon arrival at the destination.

At step 525, the card reader 115 may provide the encoded information extracted from the encoding means of the card 105 to the hosted service 140 via the in-vehicle computer 120. In this respect, in-vehicle computer 120 is responsible for processing the output signals or messages of the card reader 115, packaging the received information appropriately and transmitting a verification request to the hosted service 140 using a suitable wireless telecommunications protocol.

In response to the verification request, the available credit associated with the account is determined by the hosted service. The hosted service 140 may check the received information against a user account 150 stored in a local data 145 store accessible to the hosted service 140. If the card account information is recognised by the hosted service 140 (i.e. it matches a user account 150) and there is sufficient credit in the user account, then at step 530 the hosted service 140 generates and sends a message back to the in-vehicle computer 120 to indicate that the card 105 appears to be valid and adequate credit is available in the applicable user account 150. The hosted service 140 may also send user account information, such as the user's address or addresses, any special instructions relating to a disability or communication barrier, a rating given to them by previous drivers, and the user's account balance (if these details are not stored physically on the card itself) to the in-vehicle computer 120. Although the hosted service 140 looks up the available credit based on user account information, the available credit can also be considered to be determined by the in-vehicle computer 120 by means of sending the validation request and interpreting the data received from the hosted service 140 in the response.

On the other hand, if the hosted service 140 cannot validate the PIN received or cannot locate the user account 150 or optionally if there is minimal or no credit in the user's account, then the hosted service 140 generates and sends a message back to the in-vehicle computer 120 indicating that the card is not recognised or does not have adequate funds, at step 535. At this point, the driver may ask for alternative payment means or decline to perform the transport service.

In some circumstances, the card 105 may have originated from another country that also employs systems 100 in a similar manner. In such circumstances, the hosted service 140 may determine from a received unique identifier of the card 105 that it originates from another country. The hosted service 140 may then look up an IP address (stored in a local or remote data store 145 accessible to the hosted service 140) of another hosted service 140 in the other country and communicate with that other hosted service 140 to check and/or debit the user's account balance.

If the in-vehicle computer 120 receives a message from the hosted service 140 that the card 105 and user account 150 are valid and contain a suitable credit amount, then an appropriate message may be displayed to the driver via the display 122 incorporated in or associated with the in-vehicle computer 120. The display 122 may also display details such as the identity of the passenger, any special instructions relating to a disability or communication barrier, a rating given to them by previous drivers, and the amount of credit available on the card, as determined from the information stored in relation to card 105 on hosted service 140. Subsequent to or simultaneous with transmission of the validation message back to in-vehicle computer 120, hosted service 140 logs appropriate fare information regarding the proposed transport service at step 540. Such information may include time, location, user identification, vehicle and/or driver identification, proposed destination, user account balance, etc.

Optionally, at step 545, the user's home address or other default destination address or addresses may be displayed to the vehicle driver via the display 122 of in-vehicle computer 120. The destination address may be read from the card 105 using card reader 115 and decoded by in-vehicle computer 120 or the home address information may be looked up by the hosted service 140 and contained within the validation message received back from the hosted service 140 at step 530. Step 545 may be performed regardless of any response from hosted service 140. Step 545 may also include the in-vehicle computer 120 automatically providing the user's default destination address to the in-vehicle navigation system 125. For users who may be particularly tired, inebriated or otherwise not able to effectively communicate verbally, automatic reading of the user's home address may be helpful in ensuring that the driver can transport the user to the correct destination. Also, automatic provision of the default destination address to the navigation system 125 avoids the need for the card user to communicate the destination address to the driver, which can sometimes be complicated by language difficulties. This also avoids the need for the driver to input the destination address in the navigation system 125, which can sometimes be prone to errors.

At step 550, once the in-vehicle system 110 has received the destination address, either verbally from the user or automatically as described above, the vehicle may depart for that destination. Alternatively, step 550 may include prompting the user to agree to the fare amount being debited from their account on arrival at the destination. This may be done, for example, by presenting the terms of the fare on the display 122 incorporated in or associated with the in-vehicle computer 120. The display 122 may additionally present an 'I agree' option or similar option for selection by suitable input means on the card reader 115. If the user clicks, presses, or otherwise selects this option, the vehicle may depart for the destination received by (or manually input into) the in-vehicle system 110.

Figure 6 shows a method 600 of concluding the transport service initiated in method 500. At step 605, the vehicle arrives at the previously determined destination. The driver may press a button to communicate to the in-vehicle computer 120 that the destination has been reached (for example by pressing a button on the in-vehicle computer 120 or on a fare meter to stop metering of the fare, resulting in a signal being sent to the in-vehicle computer 120), or this could be automatically communicated to the in-vehicle computer 120 by the in-vehicle navigation system 125 once the GPS data indicates the vehicle 108 is at the destination. When the in-vehicle computer 120 receives a communication to indicate that the destination has been reached, at step 610, the in-vehicle system 110 calculates the fare, including any extra charges such as toll fees, and sends the resultant amount to the hosted service 140. At step 615, the host service 140 deducts the fare from the user account balance and full details of the transport service may be logged in a data store (not shown) accessible to the hosted service 140.

Optionally, the hosted service 140 may automatically generate a summary of the fare transaction and send this in an electronic message, such as an email, to a designated user account or IP address. This summary may also be printed on a piece of paper by the in-vehicle printer 128 and handed by the driver to the user. Such a summary may include information to enable the user to subsequently identify the vehicle or the driver in case of any dispute or in case the user left property in the vehicle. Such information may also be used to allow the user to provide positive or negative feedback regarding the service of the driver. Equally, the driver may be invited by in-vehicle computer 120 to provide feedback to the hosted service 140 regarding the passenger. This tracking of the transport service information can provide increased safety and security for both driver and passenger, as well as increasing the ability to catch drivers or passengers that attempt to defraud the other.

Optionally, at step 620, hosted service 140 may check the balance of the user account 150 against a pre-determined minimum balance level. This minimum balance level may be in the order of $100, $150 or $200, for example, or optionally an amount corresponding to the maximum possible or likely fare, corresponding to the largest geographical area in which the transport service can operate. If the balance is below the minimum balance level, then at step 625, the hosted service 140 may automatically initiate a top-up transaction and optionally notifies the user of this with the user's nominated financial institution 165. The top-up transaction debits the user's bank account 167 in an amount sufficient to return the balance of user account 150 above the minimum balance level, so that the user will have adequate funds for the next transport fare. Alternatively, the hosted service 140 may automatically generate and send a message to the user's nominated email account 162 or other notification means, indicating that a top-up of the account is needed.

Alternatively, in some embodiments the driver may present the card reader 115 to the user at step 610 for the user to again enter the PIN, or to otherwise authorise payment of the transport service fare determined at the end of the trip. Once again, the in-vehicle computer 120 may receive the PIN and encoded information from the card 105 via the card reader 115 and generate and transmit a message wirelessly to hosted service 140 to trigger completion of a debit transaction for the fare amount. If the entered PIN is not recognised, then PIN entry may be reattempted or the driver may request an alternative means of payment.

If the PIN is recognised by the host service 140, then an appropriate message is sent back wirelessly to in-vehicle computer 120, following which the user may be asked to accept the calculated fare and conclude the transaction. If the user does not accept the fare, then the user may be asked for an alternative form of payment, such as a conventional credit card or cash. Otherwise, if the fare is accepted, for example by making an appropriate user selection on the card reader 115, then the process continues from step 615.

Use of card 105 may result in a number of advantages. Drivers may feel secure knowing that a passenger holding card 105 is likely to be able to pay the fare. Likewise, as the identity details of the passenger may be recorded when card 105 is used, the driver may feel less at risk of being the subject of an assault, theft or robbery. Due to this, passengers with the card may feel assured that they will be able to be picked up by a taxi, even if their appearance places them in a demographic that may make taxi drivers generally hesitant about accepting them as passengers. Passengers may likewise feel safe accepting transportation knowing the details of the journey and the driver are recorded. Both the driver and the passenger may be more comfortable using the card knowing they are unlikely to be cheated in terms of the payment. As destinations are recorded and the details of each trip are communicated to the passenger, overcharging should not occur or should occur infrequently, and can be discovered and dealt with if it does occur. Furthermore, if the driver or passenger feels that they have been treated unfairly, they will be able to leave feedback or rate their experience, which will warn future drivers and passengers, and promote good behaviour.

Embodiments have been described generally herein by way of non-limiting example. Thus, this detailed description should be taken as illustrative and not restrictive, taking into account that some variation or modification of the described embodiments is possible without departing from the spirit and scope of the invention or inventions described herein.

The following paragraphs set out various aspects and features of embodiments of the invention.
1. A card for use in relation to a transport service, comprising:
   a body having a first face and an opposed second face;
   machine-readable code storage means carried by the body and storing coded information;
   at least one retroreflective area on at least one of the first face and second face; and
   identification information visible on at least one of the first side and the second side, the identification information corresponding in part to the coded information.
2. The card of paragraph 1, wherein the at least one retroreflective area covers at least two thirds of the first face or the second face.
3. The card of paragraph 1 or paragraph 2, wherein the code storage means comprises at least one of: an encodable magnetic substrate; an induction coil; a barcode; a radio-frequency identification (RFID) tag; and an integrated circuit with external communication means and a memory chip.
4. The card of any one of paragraphs 1 to 3, wherein the at least one retroreflective area is disposed on an opposite face to the identification information.
5. The card of any one of paragraphs 1 to 4, wherein the code storage means stores information enabling a user credit to be automatically determined, wherein the user credit can be applied to pay for a transport fare.
6. The card of any one of paragraphs 1 to 5, wherein the identification information comprises at least one of: a card serial number; a user account number; and a credit or debit account identifier.
7. The card of any one of paragraphs 1 to 6, wherein the identification information includes information identifying a registered user of the card.
8. The card of any one of paragraphs 1 to 7, wherein the coded information comprises at least one physical address associated with a registered user of the card or comprises an identifier usable to look up at least one physical address associated with a registered user of the card in a remote data store.
9. Use of the card of any one of paragraphs 1 to 8 to hail a transport vehicle by facing at least one retroreflective area toward the service vehicle and to pay for a transport fare.
10. A method of facilitating a transport service, comprising:
   at a beginning of the transport service, reading coded information from a card using an automated card reader in a transport vehicle, the coded information being in a form not readable by humans;
   determining a pre-paid credit associated with the card based on the coded information; and
   at the end of the transport service, debiting an amount of a transport fare from the pre-paid credit.
11. The method of paragraph 10, wherein the debiting is performed automatically.
12. The method of paragraph 10 or paragraph 11, wherein the card is the card of any one of paragraphs 1 to 8.
13. The method of any one of paragraphs 10 to 12, wherein the card comprises physical address information of a registered user of the card.
14. The method of paragraph 13, wherein the coded information read from the card comprises the physical address information.
15. The method of any one of paragraphs 10 to 14, further comprising determining the physical address information of a registered user of the card based on the coded information.
16. The method of paragraph 14 or paragraph 15, further comprising transmitting the physical address information to a vehicle navigation system of the transport vehicle.
17. The method of any one of paragraphs 13 to 16, wherein physical address information of the registered user is printed on the card in a human readable form.
18. The method of any one of paragraphs 10 to 17, further comprising displaying on the in-vehicle computer a prompt asking the user to enter a personal identification number (PIN) before determining the pre-paid credit associated with the card.
19. The method of any one of paragraphs 10 to 18, further comprising displaying the coded information on a display in the transport vehicle.
20. The method of any one of paragraphs 10 to 19, further comprising again reading the card at the end of the transport service using the automated reading means, wherein the debiting is performed in response to the again reading.
21. A system configured to perform the method described in any one of paragraphs 10 to 20.
22. A system for facilitating a transport service, comprising:
   a server system in communication with an in-vehicle computer comprising a card reader, the server system being configured to: receive a balance query from the in-vehicle computer in relation to a pre-paid account associated with a card read by the card reader, determine an available credit in the pre-paid account and transmit a reply to the in-vehicle computer indicating the available credit.
23. The system of paragraph 22, wherein the card is the card of any one of paragraphs 1 to 8.
24. The system of paragraph 22 or paragraph 23, further comprising the system described in paragraph 21.
25. The system of any one of paragraphs 22 to 24 wherein the server system is in communication with an external server hosting an email account associated with the pre-paid account.
26. The system of any one of paragraphs 22 to 25 wherein the server system is in communication with a financial institution server managing a bank account associated with the pre-paid account.
27. The system of any one of paragraphs 22 to 26, wherein the server system is further configured to receive fare detail data from the in-vehicle computer and to log this data in a data store accessible to the server system.
28. The system of any one of paragraphs 22 to 27, wherein the server system is further configured to store information associated with the user of the pre-paid account, including a default destination address.
29. The system of paragraph 28, wherein the server system is further configured to receive a query from the in-vehicle computer in relation to the stored information associated with the user of the pre-paid account, and to transmit a reply to the in-vehicle computer communicating the stored information.
30. The system of any one of paragraphs 22 to 29, further comprising a vehicle comprising the in-vehicle computer card reader.
31. A method of facilitating a transport service operable in a vehicle, the method comprising:
   receiving coded information from a card;
   determining a physical address and a prepaid credit associated with the card based on the received code information;
   providing the physical address to a navigation system;
   subject to receiving an indication from the navigation system that the vehicle is in a proximity of the physical address, debiting an amount from the pre-paid credit.
32. A system for facilitating a transport service operable in a vehicle, the system comprising:
   a card reader arranged to receive coded information from a card; and
   a processor arranged to:
      receive coded information from a card;
      determine a physical address and a prepaid credit associated with the card based on the received code information;
      provide the physical address to a navigation system;
      subject to receiving an indication from the navigation system that the vehicle is in a proximity of the physical address, debit an amount from the pre-paid credit.

## Claims

1. A card for use in relation to a transport service, comprising:
a body having a first face and an opposed second face;
machine-readable code storage means carried by the body and storing coded information;
at least one retroreflective area on at least one of the first face and second face; and
identification information visible on at least one of the first side and the second side, the identification information corresponding in part to the coded information.

2. The card of claim 1, wherein at least one of:
the at least one retroreflective area covers at least two thirds of the first face or the second face; and
the at least one retroreflective area is disposed on an opposite face to the identification information.

3. The card of claim 1 or claim 2, wherein at least one of:
the code storage means comprises at least one of: an encodable magnetic substrate; an induction coil; a barcode; a radio-frequency identification (RFID) tag; and an integrated circuit with external communication means and a memory chip; and
the code storage means stores information enabling a user credit to be automatically determined, wherein the user credit can be applied to pay for a transport fare.

4. The card of any one of claims 1 to 3, wherein at least one of:
the identification information comprises at least one of: a card serial number; a user account number; and a credit or debit account identifier; and
the identification information includes information identifying a registered user of the card.

5. The card of any one of claims 1 to 4, wherein the coded information comprises at least one physical address associated with a registered user of the card or comprises an identifier usable to look up at least one physical address associated with a registered user of the card in a remote data store.

6. A method of facilitating a transport service, comprising:
at a beginning of the transport service, reading coded information from a card using an automated card reader in a transport vehicle, the coded information being in a form not readable by humans;
determining a pre-paid credit associated with the card based on the coded information; and
at the end of the transport service, debiting an amount of a transport fare from the pre-paid credit.

7. The method of claim 6, wherein the debiting is performed automatically.

8. The method of claim 6 or claim 7, further comprising determining physical address information of a registered user of the card based on the coded information.

9. The method of any one of claims 6 to 8, further comprising transmitting the physical address information to a vehicle navigation system of the transport vehicle.

10. The method of claim 9, further comprising debiting an amount from the pre-paid credit subject to receiving an indication from the navigation system that the vehicle is in a proximity of the physical address.

11. The method of any one of claims 6 to 10, further comprising at least one of:
displaying on the in-vehicle computer a prompt asking the user to enter a personal identification number (PIN) before determining the pre-paid credit associated with the card;
displaying the coded information on a display in the transport vehicle; and
again reading the card at the end of the transport service using the automated reading means, wherein the debiting is performed in response to the again reading.

12. A system for facilitating a transport service, comprising:
a server system in communication with an in-vehicle computer comprising a card reader, the server system being configured to: receive a balance query from the in-vehicle computer in relation to a pre-paid account associated with a card read by the card reader, determine an available credit in the pre-paid account and transmit a reply to the in-vehicle computer indicating the available credit.

13. The system of claim 11, wherein the server system is in communication with at least one of:
an external server hosting an email account associated with the pre-paid account; and
a financial institution server managing a bank account associated with the pre-paid account.

14. The system of claim 12 or claim 13, wherein the server system is further configured to perform at least one of:
receiving fare detail data from the in-vehicle computer and logging this data in a data store accessible to the server system; and
storing information associated with the user of the pre-paid account, including a default destination address; and
receiving a query from the in-vehicle computer in relation to the stored information associated with the user of the pre-paid account, and transmitting a reply to the in-vehicle computer communicating the stored information.

15. A system for facilitating a transport service operable in a vehicle, the system comprising:
a card reader arranged to receive coded information from a card; and
a processor arranged to:
receive coded information from a card;
determine a physical address and a prepaid credit associated with the card based on the received code information;
provide the physical address to a navigation system;
subject to receiving an indication from the navigation system that the vehicle is in a proximity of the physical address, debit an amount from the pre-paid credit.
